# EUROPEAN PATENT APPLICATION

(11) **EP 3 061 508 A2**
(43) Date of publication of application: **31.08.2016**
(21) Application number: 14856220.0
(22) Date of filing: 20.10.2014
(51) Int. Cl.: B01D 5/00

(54) **OIL VAPOR COLLECTING DEVICE**

(30) Priority: 21.10.2013 KR 20130125314; 06.10.2014 KR 20140134289
(71) Applicant: Yang, Dea Kwon, Chungcheongbuk-do 27809 (KR); Yang, Jong Kyu, Chungcheongbuk-do 27676 (KR)
(72) Inventor: YANG, Jong Gyu, Daeso-myeon (KR); YANG, Dae kwon, 17, Daenong-ro, Heungdeok-gu (KR)
(74) Representative: Carvajal y Urquijo, Isabel
(86) International application number: PCT/KR2014/009836
(87) International publication number: WO 2015/060598

(57) **Abstract**

The present invention provides an oil vapor collecting device comprising: a first gathering tank for collecting oil vapor generated during refueling of a vehicle through a suction pump; a cooling tower which has a plurality of feeding tubes formed therein to feed the oil vapor collected in the first gathering tank to a lower portion thereof, and condenses a gas component contained in the oil vapor fed to the feeding tubes; a second gathering tank which is located at the lower portion of the cooling tower and is connected to one side ends of the feeding tubes, the other side ends of which are connected to the first gathering tank, and in which a fluid component of the oil vapor collected via the cooling tower is collected; a fluid storage tank which is located below the second gathering tank and stores the fluid component of the oil vapor collected in the second gathering tank via the cooling tower; a refrigerant pipe which is located inside the cooling tower and condenses the gas component contained in the oil vapor fed via the feeding tubes; and a refrigerant supply means for supplying a refrigerant to the refrigerant pipe. Thus, the present invention can collect the oil vapor generated during refueling of a vehicle, thereby preventing dangerous situations such as an explosion and a fire, resulting from the oil vapor, and can reuse the fluid component of the collected oil vapor, thereby improving energy efficiency.

## Description

### CROSS-REFERENCE TO RELATED APPLICATIONS

This non-provisional patent application is a national stage application of International Patent Application No. PCT/KR2014/009836 filed on October 20, 2014, which claims priority under 35 U.S.C. § 119 to Korean Patent Application Nos. 10-2013-0125314 and 10-2014-0134289, respectively filed on October 21, 2013 and October 6, 2014, in the Korean Intellectual Property Office, the disclosures of which are incorporated by reference herein in their entireties.

### TECHNICAL FIELD

The present invention relates to an oil vapor collecting device, and more particularly, to an oil vapor collecting device which is configured to collect oil vapor generated during refueling a vehicle and prevent oil vapor from being released into the atmosphere.

### DISCUSSION OF RELATED ART

Referring to a technical background disclosed in Korean Patent Application Publication No. 2011-0095002, most vehicles currently acquire driving energy from an engine converting a combustion energy of a fossil fuel to a mechanical energy. Vehicles equipped with an engine combust a fuel in a fuel tank and requires frequent refueling.

Typically, the refueling for vehicles like a car occurs in a gas station and a fuel dispenser of a gas station is equipped with a device, e.g., a pump, to feed a large amount of fuel to a fuel tank in a short period of time. Upon refueling using such a fuel dispenser, a large amount of oil vapor is generated inside the fuel tank due to pressure of a fluid discharge pump and the oil vapor is volatilized into the atmosphere, thereby causing air pollution.

As is well known, a fossil fuel contains volatile organic compounds (VOC) that are harmful to a human body and Korean Atmospheric Environment Protection Law sets an effluent standard for VOC producing facilities, e.g., a gasoline refinement and storage facility, a gas station, or a painting facility to control VOC discharge.

The oil vapor generated during the refueling not only causes discomfort of a driver or a refueling person, but is also ignited, e.g., due to a cigarette light or flame, resulting in a huge explosion or a fire hazard, when the vapor gas stays around the gas station.

### SUMMARY

The present invention provides an oil vapor collecting device which is configured to prevent a risk of an explosion or a fire, in advance, caused by an oil vapor by collecting the oil vapor generated during refueling of a vehicle and collect a fluid component contained in the collected oil vapor.

Embodiments of the present invention provide the oil vapor collecting device which includes a first gathering tank collecting oil vapor generated during refueling a vehicle using a suction pump, a cooling tower which has a plurality of feeding tubes formed therein to feed the oil vapor collected in the first gathering tank to a lower portion thereof, and condenses a gas component contained in the oil vapor fed through the feeding tubes having first ends connected with the first gathering tank and second ends, a second gathering tank which is located at the lower portion of the cooling tower and is connected to second ends of the feeding tubes and having a fluid component of the oil vapor collected via the cooling tower collected, a fluid storage tank which is located below the second gathering tank and stores the fluid component of the oil vapor collected in the second gathering tank via the cooling tower, a refrigerant pipe which is located inside the cooling tower and condenses the gas component contained in the oil vapor fed through the feeding tubes, and a refrigerant supply means which supplies a refrigerant to the refrigerant pipe.

The oil vapor collecting device according to an embodiment of the present invention may further include a heating tube disposed inside the plurality of the feeding tubes to prevent the fluid component of the oil vapor from freezing in the cooling tower and a heat supply means providing a heat source to the heating tube.

In the oil vapor collecting device according to an embodiment of the present invention, the cooling tower may be filled with a glycerin condensing the gas component contained in the oil vapor, and a ventilation hole to which a ventilation tube discharging a gas in the second gathering tank is connected may be provided in a surface of the second gathering tank. The feeding tubes having the first ends connected to the first gathering tank and the second ends connected to the second gathering tank have a spiral shape. A first penetration hole and a second penetration hole through which the refrigerant pipe connected to the refrigerant supply means pass may be formed in a surface of the cooling tower.

The oil vapor collecting device according to an embodiment of the present invention has following effects.

First, a potential risk, e.g., an explosion or a fire, due to the oil vapor may be prevented in advance by collecting the oil vapor generated during refueling of a vehicle.

Second, the collected oil vapor is fed to the second gathering tank through the feeding tubes and the fluid component contained in the oil vapor can be collected and reused, thereby increasing energy efficiency.

### BRIEF DESCRIPTION OF THE DRAWINGS

Fig. 1 is a schematic view illustrating an oil vapor collecting device according to an embodiment of the present invention;
Fig. 2 is an enlarged view illustrating an inside of a first gathering tank of Fig. 1;
Fig. 3 is an enlarged view illustrating a state in which a feeding tube is provided inside a cooling tower of Fig. 1; and
Fig. 4 is a cross-sectional view of a feeding tube.

### DETAILED DESCRIPTION OF EMBODIMENTS

Hereinafter, preferred embodiments of the present invention are described in detail with reference to the accompanying drawings. It should be noted that the terms or language set forth in the specification and the claims should not be interpreted as limiting to their typical or dictionary meanings and should be construed to comply in concept or meaning with the technical spirit of the present invention under the principle that terms may be properly defined by the inventor to better describe the invention.

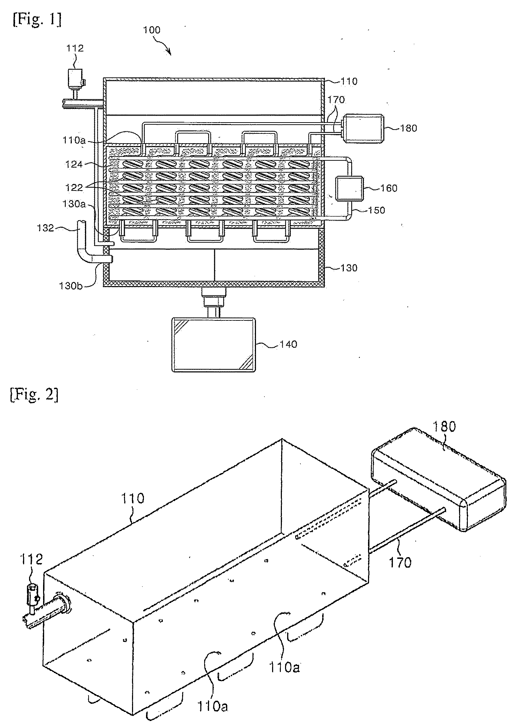

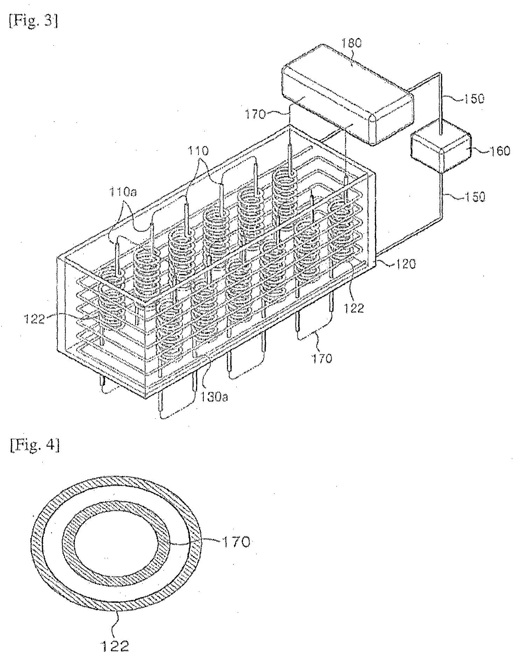

Fig. 1 is a schematic view illustrating an oil vapor collecting device according to an embodiment of the present invention, Fig. 2 is an enlarged view illustrating an inside of a first gathering tank of Fig. 1, Fig. 3 is an enlarged view illustrating a state in which a feeding tube is provided inside a cooling tower of Fig. 1, and Fig. 4 is a cross-sectional view of the feeding tube.

Referring to the drawings, the oil vapor collecting device 100 according to an embodiment of the present invention includes a first gathering tank 110, a cooling tower 120, a second gathering tank 130, a fluid storage tank 140, a refrigerant pipe 150, and a refrigerant supply means 160. The oil vapor collecting device 100 may further include a heating tube 170 and a heat supply means 180.

The first gathering tank 110 collects oil vapor generated while refueling a vehicle with a fuel, e.g., gasoline. The oil vapor generated during refueling is collected by a member collecting oil vapor provided at a fueling nozzle (not shown), and the oil vapor is fed to the first gathering tank 110 and stored therein. The first gathering tank 110 includes a suction pump 112 gathering the oil vapor collected by the oil vapor collecting member provided at a fueling nozzle (not shown) into the inside of the first gathering tank 110. The oil vapor collected in the first gathering tank 110 includes a gas component and a fluid component.

The oil vapor collected in the first gathering tank 110 is collected in a second gathering tank 120 located at a lower portion of a cooling tower through a plurality of feeding tubes 122 after passing through the cooling tower 120 located at the lower portion of the first gathering tank 110. The cooling tower 120 condenses a gas component contained in the oil vapor fed through the feeding tubes 122, and a plurality of feeding tubes 122 transferring the oil vapor of the first gathering tank 110 to the second gathering tank 130 are provided inside the cooling tower 120.

A plurality of first connecting holes 110a connected to one-side ends of the plurality of feeding tubes 122 are preferably formed at a bottom surface of the first gathering tank 110, and a plurality of second connecting holes 130a connected to the other-side ends of the plurality of feeding tubes 122 are preferably formed at a top surface of the second gathering tank 130.

The plurality of first connecting holes 110a are formed at the bottom surface of the first gathering tank 110 and the plurality of second connecting holes 130a are formed at the top surface of the second gathering tank 130, such that the feeding tubes 122 connect the first holes 110a and the second holes 130a formed at the same position and the oil vapor collected in the first gathering tank 110 is fed to the second gathering tank 130.

The cooling tower 120 is preferably filled with glycerin 124. The glycerin 124 condenses a gas component contained in the oil vapor which is transferred from the first gathering tank 110 to the second gathering tank 130 through the plurality of feeding tubes 122.

A refrigerant pipe 150 is provided in an inner circumferential surface of the cooling tower 120 and the refrigerant pipe 150 reduces a temperature of the cooling tower 120 using refrigerant supplied by a refrigerant supply means 160, thereby condensing the gas component contained in the oil vapor fed through the feeding tubes 122. The refrigerant pipe 150 condenses the gas component contained in the oil vapor in an indirect manner by reducing a temperature of the cooling tower 120. The glycerin 124 comes into close contact with the feeding tubes 122, directly condensing the gas component contained in the oil vapor that is fed through the inside of the feeding tubes 122. One ends and the other ends of the refrigerant pipe 150 are connected to the refrigerant supply means 160, allowing refrigerant supplied by the refrigerant supply means 160 to be circulated through the refrigerant pipe 150 and used.

The feeding tubes 12, one-side ends of which are connected to the first gathering tank 110 and the other-side ends of which are connected to the second gathering tank 130, have a spiral shape. The spiral shape of the feeding tubes 122 enables a feeding speed of the oil vapor transferred from the first gathering tank 110 to second gathering tank 130 to be lowered and a time for the oil vapor to stay in the cooling tower 120 increases, thereby increasing a time for condensing the gas component contained in the oil vapor and increasing condensation efficiency of the gas component contained in the oil vapor.

The fluid component of the oil vapor, which is the gas component contained in the oil vapor and condensed through the cooling tower 120, is collected in the second gathering tank 130. A ventilation hole 130b is formed at a side of the second gathering tank 130 and a ventilation tube 132 discharging a gas inside the second gathering tank 130 outdoors is preferably connected thereto.

A fluid storage tank 140 is disposed below the second gathering tank 130 and stores the fluid component of the oil vapor collected in the second gathering tank 130 via the cooling tower 120.

A heating tube 170 is provided inside the feeding tubes 122 transferring the oil vapor collected in the first gathering tank 110 into the second gathering tank 130 via the cooling tower 120. The heating tube 170 prevents the fluid component in the oil vapor transferred through the feeding tubes 122 from freezing in the cooling tower 120, and thus a heat carrier supplied by a heat supply means 180 is preferably transferred inside the heating tube 170

The heat supply means 180 supplies the heat carrier to the inside of the heating tube 170 and the heat carrier supplied to the heating tube 170 by the heat supply means 180 circulates inside the heating tube 170 and preferably returns to the heat supply means 180. The heating tube 170 may be preferably formed of a copper tube that is resistant to corrosion, easy to process, and has a high thermal conductivity.

Accordingly, a dangerous accident, e.g., an explosion or a fire resulting from the oil vapor, may be prevented in advance by collecting the oil vapor generated during refueling of a vehicle, and energy efficiency can be enhanced by reusing the fluid component of the collected oil vapor.

While the present invention has been shown and described with reference to exemplary embodiments thereof, it will be apparent to those of ordinary skill in the art that various changes in form and detail may be made thereto without departing from the spirit and scope of the present invention as defined by the following claims.

### [DESCRIPTION OF REFERENCE NUMERALS OF DRAWINGS]

| | |
|---|---|
| 100 : oil vapor collecting device | 110 : first gathering tank |
| 120 : cooling tower | 130 : second gathering tank |
| 140 : fluid storage tank | 150 : refrigerant pipe |
| 160 : refrigerant supply means | 170 : heating tube |
| 180 : heat supply means | |

## Claims

1. An oil vapor collecting device comprising:
a first gathering tank collecting oil vapor generated during refueling of a vehicle using a suction pump;
a cooling tower having a plurality of feeding tubes formed therein to feed the oil vapor collected in the first gathering tank to a lower portion thereof, and condensing a gas component contained in the oil vapor fed though the feeding tubes, the feeding tubes having first ends and second ends, the first ends of the feeding tubes connected with the first gathering tank;
a second gathering tank located at the lower portion of the cooling tower and connected to the second ends of the feeding tubes a fluid component of the oil vapor collected via the cooling tower being collected;
a fluid storage tank located below the second gathering tank and storing the fluid component of the oil vapor collected in the second gathering tank via the cooling tower;
a refrigerant pipe located inside the cooling tower and condensing the gas component contained in the oil vapor fed through the feeding tubes; and a refrigerant supply means supplying a refrigerant to the refrigerant pipe.

2. The oil vapor collecting device of claim 1, further comprising: a heating tube located in a plurality of feeding tubes and preventing the fluid component of the oil vapor fed through the feeding tubes from freezing in the cooling tower; and a heat supply means supplying heat to the heating tube.

3. The oil vapor collecting device of claim 1, wherein the cooling tower is filled with glycerin condensing the gas component of the oil vapor fed through the feeding tubes.

4. The oil vapor collecting device of claim 1, wherein a ventilation hole is formed in a surface of the second gathering tank, a ventilation tube discharging a gas inside the second gathering tank being connected to the ventilation hole.

5. The oil vapor collecting device of claim 1, wherein the feeding tubes having the first ends connected to the first gathering tank and the second ends connected to the second gathering tank have a spiral shape.

6. The oil vapor collecting device of claim 1, wherein a first penetration hole and a second penetration hole are formed in a surface of the cooling tower, the refrigerant pipe connected to the refrigerant supply means passing through the first penetration hole and the second penetration hole.
